# EUROPÄISCHE PATENTSCHRIFT

(11) **EP 3 168 089 B1**
(45) Veröffentlichungstag und Bekanntmachung des Hinweises auf die Patenterteilung: **26.09.2018**
(21) Anmeldenummer: 16198439.8
(22) Anmeldetag: 11.11.2016
(51) Int. Cl.: B60R 21/205, B60R 21/2165

(54) **BEIFAHRER-FRONTGASSACKBAUGRUPPE, BEIFAHRER-FRONTGASSACKMODUL UND FAHRZEUGINSASSEN-RÜCKHALTEVORRICHTUNG**
PASSENGER FRONT AIRBAG SUBASSEMBLY, PASSENGER FRONT AIRBAG MODULE AND VEHICLE OCCUPANT RESTRAINT DEVICE
ENSEMBLE DE COUSSIN GONFLABLE DE PASSAGER, MODULE DE COUSSIN GONFLABLE DE PASSAGER ET DISPOSITIF DE RETENUE DE PASSAGERS DE VÉHICULE

(30) Priorität: 11.11.2015 DE 202015007739 U
(43) Veröffentlichungstag der Anmeldung: 17.05.2017
(73) Patentinhaber: Dalphi Metal España, S.A., 36213 Vigo (ES)
(72) Erfinder: MARTINEZ, Abraham, 47012 Valladolid (ES); BANOS, Liborio, 34900 Palencia (ES)
(74) Vertreter: ZF TRW Patentabteilung

(56) Entgegenhaltungen:
- WO-A1-2012/169487
- JP-A- 2005 082 021
- US-A1- 2002 089 155
- US-A1- 2006 012 157
- US-A1- 2008 106 076

## Beschreibung

Die Erfindung betrifft eine Beifahrer-Frontgassackbaugruppe, ein Beifahrer-Frontgassackmodul sowie eine Fahrzeuginsassen-Rückhaltevorrichtung.

Beifahrergassäcke werden oft in einem oberen Bereich einer Armaturentafel unterhalb der Windschutzscheibe angeordnet, von wo aus sich der Gassack entlang der Windschutzscheibe und im Bogen nach unten zum Fahrzeuginsassen hin entfaltet, um den Beifahrer aufzufangen. Aufgrund dieser Ausgangsposition hat der Gassack in der anfänglichen Entfaltungsphase eine nach oben gerichtete Bewegungskomponente, bevor die Umlenkung in Richtung zum Fahrzeuginsassen hin erfolgt. Es ist wünschenswert, die Zeit bis zur Umlenkung in Richtung zum Fahrzeuginsassen möglichst kurz zu halten.

In der gattungsgemäßen US 2002/089155 A1 ist eine Beifahrer-Frontgassackbaugruppe mit den Merkmalen im Oberbegriff des Patentanspruchs 1 beschrieben. Die Baugruppe weist dabei einen zu einem Gassackpaket gefalteten Gassack sowie eine flexible Umhüllung auf, welche das Gassackpaket zusammenhält und beim Aufblasen des Gassacks längs einer vorbestimmten Reißlinie aufreißt, wobei in einigen Ausführungsformen Maßnahmen getroffen werden, um eine gewünschte Aufreißrichtung der Reißlinie, beispielsweise von links nach rechts, sicherzustellen.

Gassackbaugruppen, insbesondere Beifahrer-Frontgassackbaugruppen, bei denen ein zu einem Gassackpaket gefalteter Gassack von einer flexiblen Umhüllung zusammengehalten wird, wobei die Umhüllung beim Aufblasen des Gassacks längs einer vorbestimmten Reißlinie aufreißt, sind im Übrigen auch in den Druckschriften US 2006/012157 A1, US 2008/106076 A1, WO 2012/169487 A1 und JP 2005-082021 A offenbart.

Aufgabe der Erfindung ist es, in einer Fahrzeuginsassen-Rückhaltevorrichtung das Entfaltungsverhalten eines derartig angeordneten Beifahrergassacks zu verbessern.

Diese Aufgabe wird gelöst durch eine Beifahrer-Frontgassackbaugruppe zum Einbau unter den der Windschutzscheibe eines Fahrzeugs zugewandten, oberen Abschnitt der Armaturentafel, mit einem Gassack, der zu einem Gassackpaket gefaltet ist, welches eine Oberseite besitzt, die im eingebauten Zustand der Windschutzscheibe zugewandt und durch einen der Windschutzscheibe zugewandten Bereich des oberen Abschnitts der Armaturentafel abgedeckt ist. Die Beifahrer-Frontgassackbaugruppe weist außerdem eine flexible Umhüllung des Gassackpakets auf, die das Gassackpaket zusammenhält und die beim Aufblasen des Gassacks längs einer vorbestimmten Reißlinie an der Oberseite des Gassackpakets aufreißt. Die Reißlinie verläuft, bezogen auf eine Draufsicht auf die Oberseite des Gassackpakets, versetzt zu einem mittleren Abschnitt der flexiblen Umhüllung an der Oberseite. Der mittlere Abschnitt ist der Abschnitt welcher im eingebauten Zustand in Draufsicht auf die Oberseite des Gassack
pakets quer zur Fahrzeuglängsrichtung und in Fahrzeuglängsrichtung mittig zwischen vorderem und hinterem Rand des Gassackpakets verläuft.

Es hat sich überraschend herausgestellt, dass sich durch die Anordnung der Reißlinie in der weichen, elastischen Umhüllung das anfängliche Entfaltungsverhalten des Gassacks, insbesondere in den ersten Millisekunden nach der Aktivierung, ausreichend stark beeinflussen lässt, um eine stärkere Entfaltung in Richtung zum Fahrzeuginsassen hin zu erreichen. Auf diese Weise kann insbesondere die Bewegungskomponente des Gassackpakets in Richtung zur Windschutzscheibe reduziert werden. Da diese weiche Umhüllung im Gegensatz zum starren Kunststoff der aufbrechenden Armaturentafel eine vergleichsweise geringe Festigkeit besitzt, wurde der Anordnung der Reißlinie bislang keinerlei Bedeutung im Hinblick auf das Entfaltungsverhalten beigemessen.

Besonders vorteilhaft ist es, wenn die Reißlinie, bezogen auf eine Draufsicht auf die Oberseite des Gassackpakets, in der von der Fahrzeugfront weit entfernten Hälfte der Oberseite verläuft.

Erfindungsgemäß ist das Gassackpaket so im Fahrzeug eingebaut, dass es im eingebauten Zustand einen der Windschutzscheibe und damit der Fahrzeugfront zugewandten vorderen Rand sowie einen im eingebauten Zustand dem Fahrzeuginsassen und damit dem Fahrzeugheck zugewandten hinteren Rand aufweist. Üblicherweise ist das Gassackpaket im Wesentlichen als Quader ausgebildet, so dass die Ränder meist parallel verlaufen. Die flexible Umhüllung umgibt das Gassackpaket normalerweise in einer Wickelrichtung, in der der vordere und der hintere Rand von der flexiblen Umhüllung umschlungen sind. Die Reißlinie erstreckt sich bevorzugt wie bekannt quer zur Wickelrichtung.

Die Reißlinie verläuft ferner vorzugsweise insgesamt im Wesentlichen parallel zum vorderen und/oder hinteren Rand. Insbesondere liegt die Reißlinie näher zum hinteren Rand als zum vorderen Rand.

In einer bevorzugten Ausführungsform ist die Reißlinie aus einzelnen, nicht miteinander verbundenen Schwächungszonen zusammengesetzt, die insbesondere Schwächungslinien sein können. Die Schwächungslinien sind beispielsweise durch eine Perforation des Materials der flexiblen Umhüllung gebildet.

Erfindungsgemäss sind schräg verlaufende Schwächungslinien vorgesehen die schräg zum vorderen und/oder hinteren Rand verlaufen. Bevorzugt sind mehrere schräg verlaufende Schwächungslinien vorgesehen, die parallel zueinander ausgerichtet sind.

Außerdem können parallel zum vorderen und/oder hinteren Rand verlaufende Schwächungslinien vorhanden sein, die sich insbesondere mit den schräg verlaufenden Schwächungslinien abwechseln. Insgesamt bilden die einzelnen Schwächungslinien eine Reißlinie. Beispielsweise können die Mittelpunkte aller einzelnen Schwächungslinien auf einer Gerade liegen. Bei einer abwechselnden Anordnung von schräg verlaufenden und parallel zu einem der Ränder verlaufenden Schwächungslinie erstrecken sich die schräg verlaufenden Schwächungslinien vorzugsweise in gleichem Maß zum vorderen und zum hinteren Rand.

Eine einfache Fertigung ergibt sich durch gerade verlaufende Schwächungslinien.

Insgesamt ist die Reißlinie vorteilhaft so ausgelegt, dass die benötigte Aufreißkraft entlang der Reißlinie abschnittsweise variiert, indem z.B. Gruppen von Schwächungszonen unterschiedlich gestaltet sind.

Die Reisslinie besitzt über ihre Längserstreckung eine leichter aufreißende und eine schwerer aufreißende Hälfte. Auf diese Weise kann entlang der Reißlinie eine unterschiedliche Öffnungskraft eingestellt werden. Dies ist insbesondere nützlich, wenn der Gassack mit einem Gasgenerator aufgeblasen werden soll, der eine asymmetrische Ausströmcharakteristik aufweist, bei dem also der Großteil der Gasmenge im Bereich eines der beiden axialen Enden freigesetzt wird. Durch eine Reißlinie, die zum Öffnen entlang ihres Verlaufs unterschiedliche Kräfte benötigt, können so z.B. die Beschleunigungen und Geschwindigkeiten, mit denen das Gassackpaket die flexible Umhüllung verlässt, über die Breite des Gassackpakets ausgeglichen werden. Dies führt zu einem gleichmäßigeren Entfaltungsverhalten des Gassacks. Alternativ kann eine derartige Reißlinie dazu genutzt werden, um ein inhomogenes Austrittsverhalten des Gassackpakets über die Länge der Reißlinie hervorzurufen oder zu verstärken, damit Abschnitte des Gassackpakets anfänglich eine höhere Beschleunigung und/oder Austrittsgeschwindigkeit erfahren, um beispielsweise die Armaturentafel anfänglich "punktweise" aufzubrechen.

Der schwerer aufreißende Abschnitt, insbesondere eine schwerer aufreißende Hälfte der Reißlinie kann beispielsweise durch schräg verlaufende Schwächungslinien definiert sein, die eine geringere Neigung zum vorderen und/oder hinteren Rand und/oder eine geringere Länge aufweisen als schräg verlaufende Schwächungslinien des leichter aufreißenden Bereichs, bzw. der leichter aufreißenden Hälfte. Falls parallel zum vorderen und/oder hinteren Rand verlaufende Schwächungslinien vorgesehen sind, können auch diese in der leichter aufreißenden Hälfte länger ausgebildet sein als in der schwerer aufreißenden Hälfte.

Die Gesamtanzahl an Schwächungslinien kann in beiden Hälften gleich gewählt werden, auch die Gesamtanzahl an schräg verlaufenden und an parallel zu den Rändern verlaufenden Schwächungslinien kann gleich sein.

Es kann jedoch auch eine Ausführungsform bevorzugt werden, bei der im schwerer aufreißenden Abschnitt weniger Schwächungslinien ausgebildet sind, als im leichter aufreißenden Bereich. Diese Gestaltung kann mit den zuvor beschriebenen Gestaltungen und Anordnungen der Schwächungslinien kombiniert werden.

Die flexible Umhüllung besteht bevorzugt aus einem keine Eigensteifigkeit aufweisenden Material, insbesondere aus einer Folie, einem Fasermaterial oder einem Gewebematerial, wobei beispielsweise dasselbe Gewebe, wie es für den Gassack Verwendung findet, verwendet werden kann.

Zusätzlich zu der flexiblen Umhüllung ist im Normalfall ein Modulgehäuse vorhanden, das das Gassackpaket und die flexible Umhüllung zumindest abschnittsweise umfangsmäßig umgibt. Das Modulgehäuse kann aus einem starren Material gefertigt sein, kann aber auch aus einem flexiblen Material, beispielsweise einer Folie oder einem Gewebe, bestehen. Das Modulgehäuse ist jedoch nicht notwendiger Weise identisch mit der flexiblen Umhüllung und weist im Normalfall keine aufreißenden Schwächungszonen auf. Der Bereich in der Armaturentafel, der über der Oberseite des Gassackpakets liegt, und der sich öffnet, um den Gassack freizugeben, ist ebenfalls nicht Teil der flexiblen Umhüllung. Dieser Bereich besteht normalerweise aus einem starren Material der Armaturentafel und ist über eine Schwächungszone mit der restlichen Armaturentafel verbunden, wobei bei der Aktivierung des Gassackmoduls die Schwächungszone aufreißt und der Bereich der Armaturentafel aufklappt. Direkt unterhalb dieses Bereichs liegt vorzugsweise die flexible Umhüllung, wobei die Reißlinie der flexiblen Umhüllung durch das Öffnen des Bereichs der Armaturentafel freigelegt wird.

Die flexible Umhüllung ist normalerweise so um das Gassackpaket herumgeschlungen, dass sich ihre freien Enden überlappen. In dem Überlappungsbereich der Enden sind vorzugsweise Reißlinien in beiden im überlappenden Bereich übereinanderliegenden Lagen der flexiblen Umhüllung ausgebildet, um ein kontrolliertes Aufreißen der flexiblen Umhüllung sicherzustellen. Vorzugsweise liegen die beiden Reißlinien exakt übereinander.

Die zweite Reißlinie kann ebenfalls asymmetrisch bezüglich einer Mittellinie des Gassackpakets ausgebildet sein, also ebenfalls eine leichter aufreißende und eine schwerer aufreißende Hälfte besitzen, sie ist aber vorzugsweise bezüglich ihrer Aufreißkraft und der Form und Anordnung ihrer einzelnen Schwächungszonen symmetrisch zur Mittellinie des Gassackpakets gestaltet.

Eine derartige Beifahrer-Frontgassackbaugruppe kann in einem Beifahrer-Frontgassackmodul eingesetzt werden, das zusätzlich zu den oben schon beschriebenen Bauteilen einen Gasgenerator zum Aufblasen des Gassacks aufweist. Der Gasgenerator ist vorzugsweise zusammen mit dem Gassackpaket von der flexiblen Umhüllung umgeben.

In einer bevorzugten Ausführungsform ist der Gasgenerator in Draufsicht auf die Oberseite des Gassackpakets versetzt zu einem mittleren Abschnitt der Umhüllung angeordnet und verläuft insbesondere im Wesentlichen parallel zum vorderen und/oder hinteren Rand, wobei der Gasgenerator bevorzugt in der der Fahrzeugfront näheren Hälfte angeordnet ist. Die Reißlinie ist vorteilhaft in Draufsicht gegenüber dem Gasgenerator versetzt, insbesondere in der im eingebauten Zustand der Fahrzeugfront entfernten Hälfte der Umhüllung. Diese Anordnung hat sich als vorteilhaft erwiesen, um in der anfänglichen Entfaltungsphase des Gassacks den noch gefalteten Anteil des Gassackpakets schnell in Richtung zum Fahrzeuginsassen umzulenken und eine geringe Entfaltungsstrecke zur Windschutzscheibe hin zu erreichen.

Der Gasgenerator ist vorzugsweise ein Rohrgasgenerator, der insbesondere nur in einer seiner beiden Längshälften Strömungsöffnungen hat, die einen Ausströmbereich definieren. Das ausströmende Gas übt daher bei dieser Ausführungsform des Gasgenerators in der Längshälfte des Gasgenerators mit den Strömungsöffnungen eine höhere Kraft auf die Reißlinie aus als in der anderen Längshälfte. Es können jedoch auch Rohrgasgeneratoren mit Ausströmöffnungen auf beiden Längshälften oder Gasgeneratoren eingesetzt werden, deren Durchmesser größer als ihre Höhe ist, und deren Mittelachse senkrecht angeordnet ist.

Die leichter aufreißende Hälfte der Reißlinie kann in der Längshälfte mit den Strömungsöffnungen und dem Ausströmbereich liegen, wenn ein asymmetrisches Austrittsverhalten gewünscht ist. Liegt hingegen die schwerer aufreißende Hälfte der Reißlinie in der Längshälfte des Gasgenerators mit den Strömungsöffnungen, kann die Reißlinie bei entsprechender Gestaltung entlang ihres Verlaufs gleichmäßiger geöffnet werden, um ein eher symmetrisches Austrittsverhalten des Gassackpakets zu bewirken.

In einer Fahrzeuginsassen-Rückhaltevorrichtung kann ein derartiges Beifahrer-Frontgassackmodul so eingesetzt werden, dass das Gassackmodul unterhalb eines Abschnitts der Armaturentafel welcher der Windschutzscheibe zugewandt ist angeordnet ist, wobei ein Bereich der Armaturentafel so ausgeführt ist, dass er beim Entfalten des Gassacks geöffnet wird.

Das Gassackpaket und die Reißlinie sind vorzugsweise quer zur Fahrzeuglängsrichtung ausgerichtet, sodass der Gassack durch die Reißlinie quer zur Fahrzeuglängsrichtung austritt.

Der Gasgenerator ist bevorzugt in der der Fahrzeugfront näheren Hälfte des Gassackmoduls angeordnet.

Die leichter aufreißende Hälfte der Reißlinie kann näher an der dem Beifahrer zugeordneten Tür des Fahrzeugs liegen als die schwerer aufreißende Hälfte, um die frühe Entfaltung des Gassacks entlang der Seite des Fahrzeugs zu begünstigen. Eine umgekehrte Anordnung ist natürlich für bestimmte Anwendungsfälle auch möglich, bei der die schwerer aufreißende Hälfte der Reißlinie näher an der Beifahrertür liegt als die leichter aufreißende Hälfte.

Die Erfindung wird nachfolgend anhand eines Ausführungsbeispiels mit Bezug auf die beigefügten Figuren näher beschrieben. In den Figuren zeigen:
- Figur 1 eine schematische Schnittansicht einer erfindungsgemäßen Beifahrer-Frontgassackbaugruppe mit einem erfindungsgemäßen, durch eine flexible Umhüllung zusammengehaltenen Gassackpaket in einem erfindungsgemäßen Beifahrer-Frontgassackmodul einer erfindungsgemäßen Fahrzeuginsassen-Rückhaltevorrichtung;
- Figur 2 eine schematische Draufsicht auf das erfindungsgemäße Gassackmodul;
- Figuren 3 und 4 schematische vergrößerte Darstellungen von Schwächungszonen in beiden Hälften der Reißlinie des Gassackmoduls aus Figur 2;
- Figur 5 eine weitere schematische Draufsicht auf das Gassackmodul aus Figur 1; und
- Figur 6 eine schematische Ansicht der flexiblen Umhüllung des Gassackmoduls aus Figur 1 in flach ausgebreitetem Zustand.

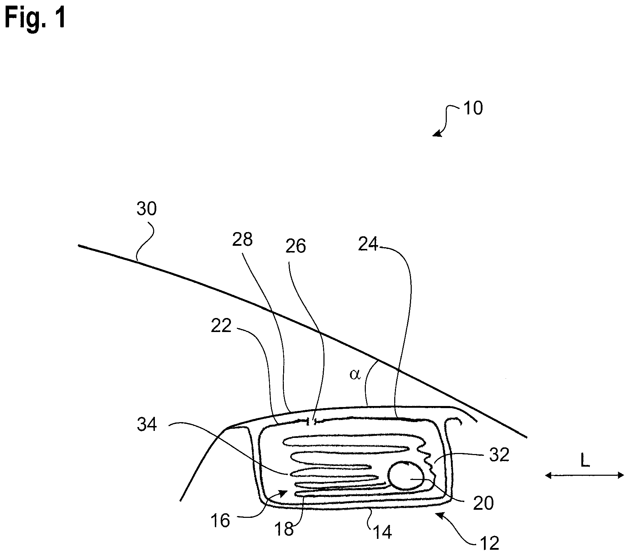

Figur 1 zeigt eine Fahrzeuginsassen-Rückhaltevorrichtung 10. Diese weist ein Beifahrer-Frontgassackmodul 12 auf (auch kurz als "Gassackmodul" bezeichnet), das ein Modulgehäuse 14 umfasst, welcher einen vor der Aktivierung des Gassackmoduls 12 zu einem quaderförmigen Gassackpaket 16 gefalteten Frontgassack 18 aufnimmt.

Der Gassack 18 ist mit einem Gasgenerator 20 gekoppelt, der ebenfalls im Modulgehäuse 14 aufgenommen ist und der das Füllgas zum Befüllen des Gassacks 18 liefert. Der Gasgenerator 20 kann im Inneren des Gassacks 18 angeordnet sein oder in das Innere hineinragen.

Das Gassackpaket 16 ist von einer flexiblen, weichen Umhüllung 22 umgeben, die das Gassackpaket 16 im gefalteten Zustand zusammenhält. Gassackpaket 16 und flexible Umhüllung 22 bilden eine Beifahrer-Frontgassackbaugruppe.

Die flexible Umhüllung 22 umgibt das Gassackpaket 16 in einer Umfangsrichtung vollständig, wobei hier auch der Gasgenerator 20 mit von der flexiblen Umhüllung 22 umschlossen ist. Die flexible Umhüllung 22 besteht aus einem keine Eigensteifigkeit aufweisenden Material, und ist beispielsweise eine Folie, ein Fasermaterial oder ein Gewebematerial, beispielsweise aus demselben Gewebe wie der Gassack 18. Die flexible Umhüllung 22 ist ein vom Modulgehäuse 14 getrenntes Bauteil.

Die flexible Umhüllung 22 ist auf einer Oberseite 24 des Gassackpakets 16 mit einer Reißlinie 26 versehen, an der die flexible Umhüllung 22 bei der Aktivierung des Gasgenerators 20 und der Befüllung des Gassacks 18 aufreißt.

Das Gassackmodul 12 ist unter einem oberen, im Wesentlichen horizontalen Abschnitt 28 einer Armaturentafel 25 angeordnet, der einer Windschutzscheibe 30 eines Fahrzeugs zugewandt ist. Die Windschutzscheibe 30 bildet mit dem oberen Abschnitt der Armaturentafel 25 einen Winkel α von etwa 30° - 45°, hier z.B. von etwa 32°.

Der direkt über dem Gassackmodul 12 liegende Abschnitt 28 der Armaturentafel 25 ist so ausgebildet, dass er sich öffnet und das Austreten des Gassacks 18 erlaubt, wenn die Fahrzeuginsassen-Rückhaltevorrichtung 10 aktiviert wird.

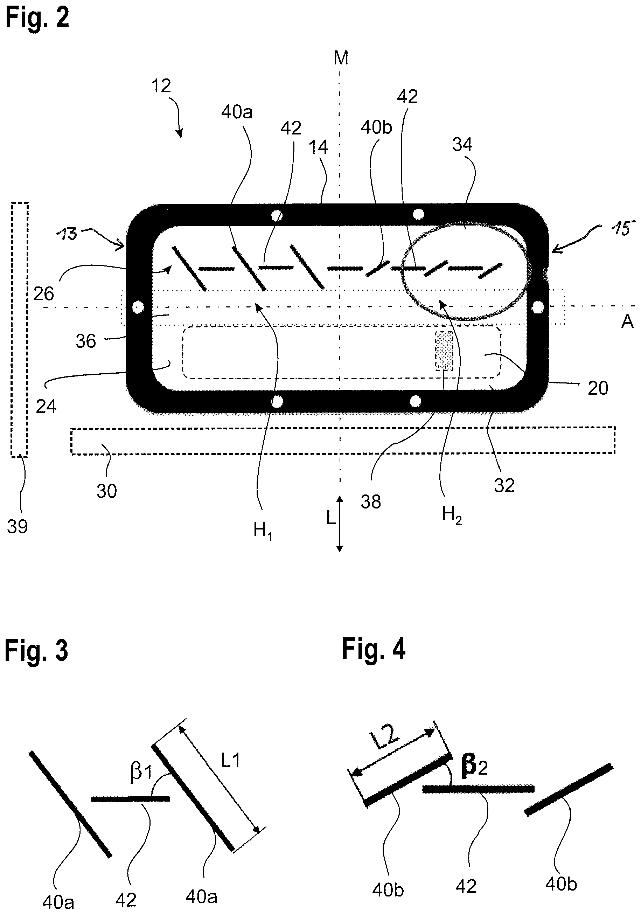

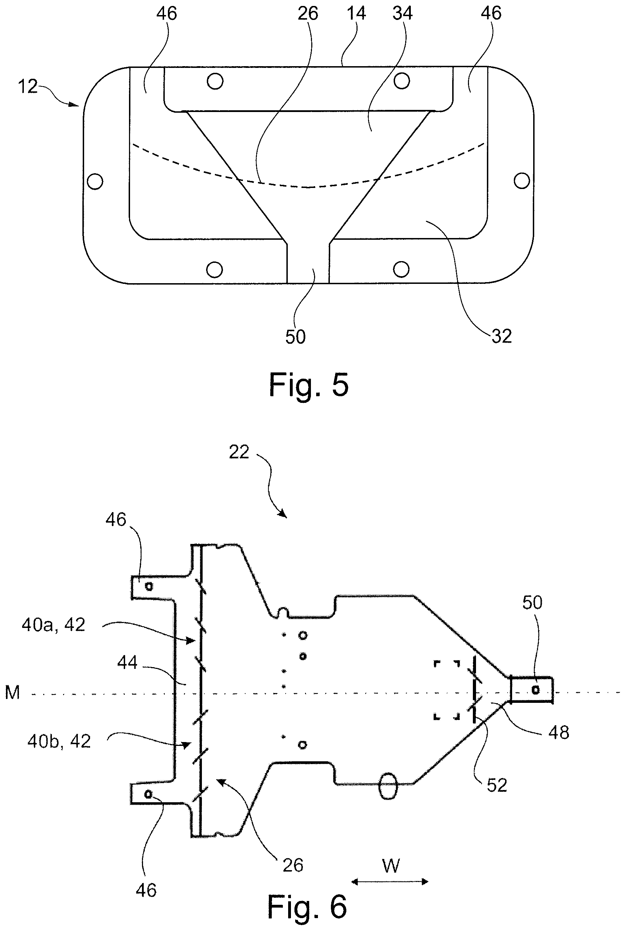

Figuren 2 und 5 zeigen jeweils eine Draufsicht auf das Gassackmodul 12.

In Draufsicht auf die Oberseite 24 des Gassackpakets 16 ist dieses sowie auch das Modulgehäuse 14 in etwa rechteckig, wobei die langen Seiten des Rechteckes durch einen vorderen Rand 32 und einen hinteren Rand 34 gebildet sind. Der vordere Rand 32 weist im eingebauten Zustand des Gassackmoduls 12 zur Fahrzeugfront, während der hintere Rand 34 zu einem Fahrzeuginsassen und dem Fahrzeugheck gerichtet ist.

Im Gassackpaket 16 und im Modulgehäuse 14 ist der Gasgenerator 20 so platziert, dass er in Draufsicht auf die Oberseite 24 des Gassackpakets 16 parallel zum vorderen Rand 32 und zum hinteren Rand 34 ausgerichtet ist, aber bezüglich eines mittleren Abschnitts 36 der flexiblen Umhüllung 22 in Richtung zum vorderen Rand 32 hin versetzt ist (siehe Figur 2). Der Gasgenerator 20 liegt also im eingebauten Zustand des Gassackmoduls 12 näher am vorderen Rand 32 (siehe auch Figur 1).

Die Ränder 32 erstrecken sich quer zur Fahrzeuglängsachse.

Der Gasgenerator 20 ist ein langgestreckter Rohrgasgenerator, der Strömungsöffnungen 38 aufweist, die alle in einem Gasausströmbereich zusammengefasst sind, wobei der Gasausströmbereich von einer gedachten Mittellinie M des Gasgenerators 20 versetzt zu einem axialen Ende des Gasgenerators 20 hin positioniert ist.

In diesem Beispiel ist der Gasgenerator 20 so angeordnet, dass seine Mittellinie M mit einer Mittellinie M des gesamten Gassackmoduls 12 zusammenfällt. Die Mittellinie M liegt in etwa in der Fahrzeuglängsrichtung L, sodass das Gassackpaket 16 im Wesentlichen quer zur Fahrzeuglängsrichtung L ausgerichtet ist. Eine Wickelrichtung W, in der die flexible Umhüllung das Gassackpaket 16 umschlingt (siehe Figur 6), liegt ebenfalls in etwa in der Fahrzeuglängsrichtung L.

Die Reißlinie 26 verläuft in Draufsicht auf die Oberseite 24 des Gassackpakets 16 parallel zu den beiden Rändern 32, 34 und ist gegenüber dem Gasgenerator 20 und gegenüber dem mittleren Abschnitt 36 der Oberseite 24 des Gassackpakets 16 in Richtung zum hinteren Rand 34 hin versetzt, wobei sie in diesem Beispiel vollständig vor einer gedachten Mittelachse A liegt, die das Gassackpaket 16 zwischen seinen beiden Rändern 32, 34 unterteilt (siehe Figur 2) und den mittleren Abschnitt 36 definiert.

Außerdem ist die Reißlinie 26 bezüglich der Mittellinie M in ihrer Aufreißstärke asymmetrisch ausgebildet. Generell ist die Reißlinie 26 auf einer Hälfte H1 zur Mittellinie M so ausgebildet, dass sie mit einer niedrigeren Reißkraft zu öffnen ist als auf der anderen Hälfte. In diesem Beispiel ist die Hälfte H₁ der Reißlinie 26, die auf der Seite des Gasgenerators 20 ohne die Strömungsöffnungen 38 liegt, schwächer ausgebildet als die Hälfte H₂ der Reißlinie 26, die aus der Seite des Gasgenerators 20 mit den Strömungsöffnungen 38 liegt. Die Hälfte H₁ der Reißlinie 26 ist im eingebauten Zustand zu einer Beifahrertür 39 gerichtet (angedeutet in Figur 2).

In diesem Beispiel ist die Reißlinie 26 durch mehrere einzelne, nicht miteinander verbundene Schwächungszonen gebildet, die hier durch gerade Schwächungslinien 40, 42 realisiert sind. Jede einzelne Schwächungslinie 40, 42 kann beispielsweise durch eine Perforation gebildet sein oder eine einzige Perforation sein. Zwischen den einzelnen Schwächungszonen ist das Material der flexiblen Umhüllung 22 jedoch nicht geschwächt.

Über die gesamte Reißlinie 26 sind zwei Arten von Schwächungslinien 40, 42 vorgesehen, nämlich schräg zu den Rändern 32, 34 verlaufende Schwächungslinien 40 und parallel zu Rändern 32, 34 verlaufende Schwächungslinien 42.

Entlang der Reißlinie 26 wechseln sich schräg verlaufende Schwächungslinien 40 jeweils mit parallel zu den Rändern verlaufenden Schwächungslinien 40 ab. Betrachtet man die Mittelpunkte aller Schwächungslinien 40, 42, so liegen diese in diesem Beispiel auf einer Geraden, die die Reißlinie 26 bildet.

In jeder Hälfte H₁, H₂ der Reißlinie 26 sind die schräg verlaufenden Schwächungslinien 40 parallel zueinander ausgerichtet. Die schräg verlaufenden Schwächungslinien 40 der beiden Hälften H₁, H₂ sind aber gegenläufig ausgerichtet, wobei die Schwächungslinien 40a der in Figur 2 linken Hälfte H₁ und die Schwächungslinien 40b der rechten Hälfte H₂ in Richtung zum hinteren Rand 34 von der Mittellinie M weg geneigt sind.

In der in Figur 2 rechten Hälfte H₂, also der Hälfte, in der die Strömungsöffnungen 38 liegen, sind die einzelnen schräg verlaufenden Schwächungslinien 40b jeweils kürzer ausgebildet als die Schwächungslinien 40a in der linken Hälfte H₁, wobei die Länge L₂ der Schwächungslinien 40b z.B. etwa 20% bis 50% kürzer als die Länge L₁ der Schwächungslinien 40a gewählt sein kann (siehe Figuren 3 und 4).

Außerdem bilden die schräg verlaufenden Schwächungslinien 40a mit den parallel zu den Rändern verlaufenden Schwächungslinien 42 in der linken Hälfte H₁ einen größeren Winkel als die Schwächungslinien 40b. Der Winkel β₁ in der linken Hälfte H₁ kann z.B. etwa zwischen 70° und 30°, vorzugsweise 60° und 40° liegen, während der Winkel β₂ in der rechten Hälfte H₂ bei etwa 10° bis 40°, vorzugsweise bei 20° bis 35° liegen kann.

Die parallel zu den Rändern verlaufenden Schwächungslinien 42 sind hingegen in beiden Hälften H₁, H₂ der Reißlinie identisch ausgebildet. Natürlich wäre auch hier eine Variation zwischen den beiden Hälften denkbar, um die Aufreißeigenschaften der flexiblen Umhüllung anzupassen.

Die Abstände benachbarter Schwächungslinien 40a, 42 in der linken Hälfte H₁, also die Bereiche, in denen das Material der flexiblen Umhüllung zwischen den Schwächungslinien nicht geschwächt ist, sind z.B. etwa 30% größer gewählt als in der rechten Hälfte H₂.

Figur 5 eine weitere schematische Draufsicht auf das Gassackmodul aus Figur 1. Wie hier dargestellt, verläuft die Reißlinie 26 in Draufsicht auf die Oberseite 24 des Gassackpakets 16 nicht exakt parallel zu den beiden Rändern 32, 34, sondern bogenförmig und vorzugsweise symmetrisch von einer Seite (der Beifahrertür zugewandte Seite 13) zur anderen Seite (der Fahrzeugmitte zugewandten Seite 15) des Gassackpaketes. Vorzugsweise ist der Bogen auf der der Windschutzscheibe zugewandten Oberseite des Gassackpaketes so orientiert, dass der mittlere (die Mittellinie M kreuzende) Bogenabschnitt in Fahrzeugrichtung weiter vorne (also weiter vom Beifahrer weg), positioniert ist, als die beiden seitlichen Enden des Bogens der Reißlinie. Natürlich kann die beschriebene bogenförmige Reißlinie auch aus den beschriebenen einzelnen Schwächungslinien gebildet sein und auch ein asymmetrisches Aufreißverhalten aufweisen.

Auch hier ist vorzugsweise die Reißlinie gegenüber dem Gasgenerator 20 und gegenüber dem mittleren Abschnitt 36 der Oberseite 24 des Gassackpakets 16 in Richtung zum hinteren Rand 34 hin versetzt, wobei sie auch vollständig vor der gedachten Mittelachse A liegen kann, die das Gassackpaket 16 zwischen seinen beiden Rändern 32, 34 unterteilt (siehe Figur 2).

In einer weiteren, nicht gezeigten Ausführungsform kann der Bogen auf der der Windschutzscheibe zugewandten Oberseite des Gassackpaketes so orientiert sein, dass der mittlere (die Mittellinie M kreuzende) Bogenabschnitt in Fahrzeugrichtung weiter hinten (also weiter am Beifahrer) positioniert ist, als die beiden seitlichen Enden des Bogens der Reißlinie.

Auch hier ist vorzugsweise die Reißlinie gegenüber dem Gasgenerator 20 und gegenüber dem mittleren Abschnitt 36 der Oberseite 24 des Gassackpakets 16 in Richtung zum hinteren Rand 34 hin versetzt, wobei sie auch vollständig vor der gedachten Mittelachse A liegen kann, die das Gassackpaket 16 zwischen seinen beiden Rändern 32, 34 unterteilt (siehe Figur 2).

Der Durchhang des Bogens (Abstand zwischen seiner Mitte und einer gedachten Verbindungslinie seitlichen Enden) beträgt zwischen 0,0 cm und 5,0 cm, vorzugsweise zwischen 1,0 cm und 3,0 cm.

Figur 6 zeigt die flexible Umhüllung 22 im flach ausgebreiteten Zustand.

Die flexible Umhüllung besteht z.B. aus einem Gassackgewebe. Es ist möglich, den Zuschnitt so auszurichten, dass die Fadenrichtung in etwa in einem Winkel von 45°zu der dargestellten Mittellinie M verläuft.

Die Reißlinie 26 ist hier bezüglich der Mittellinie M (in Figur 6 angedeutet) symmetrisch gestaltet. Sie kann aber bevorzugt auch entsprechend der zuvor beschriebenen Gestaltung ausgebildet sein.

Am in Figur 6 linken Ende 44 hat die flexible Umhüllung 22 zwei Befestigungsabschnitte 46 und am in Figur rechten Ende 48 einen einzigen Befestigungsabschnitt 50. Nachdem die flexible Umhüllung 22 um das Gassackpaket 16 und den Gasgenerator 20 gewickelt wurde, wird sie mit den Befestigungsabschnitten 46, 50 am Modulgehäuse 14 befestigt, wie dies in Figur 5 gezeigt ist. Das Umhüllen erfolgt in der Wickelungsrichtung W, die in Figur 6 angedeutet ist.

Die axialen Enden 44, 48 überlappen dabei, wie auch aus Figur 5 deutlich wird. Daher ist eine zweite Schwächungszone, hier auch in Form einer zweiten Reißlinie 52, nahe des in Figur 4 rechten Endes 48 vorgesehen. Diese Reißlinie 52 ist hier bezüglich der Mittellinie M (in Figur 4 angedeutet) symmetrisch gestaltet. Sie kann aber auch entsprechend der Gestaltung der Reißline 26 ausgebildet sein. In der fertigen Beifahrer-Frontgassackbaugruppe liegt die Reißlinie 52 exakt unterhalb der Reißlinie 26.

## Patentansprüche

1. Beifahrer-Frontgassackbaugruppe zum Einbau unter den der Windschutzscheibe (30) eines Fahrzeugs zugewandten, oberen Abschnitt der Armaturentafel, mit
einem Gassack (18), der zu einem Gassackpaket (16) gefaltet ist, welches im eingebauten Zustand einen der Fahrzeugfront zugewandten vorderen Rand (32) sowie einen dem Fahrzeugheck zugewandten hinteren Rand (34) aufweist und eine Oberseite (24) besitzt, die im eingebauten Zustand der Windschutzscheibe (30) zugewandt und durch einen der Windschutzscheibe (30) zugewandten Bereich (28) des oberen Abschnitts der Armaturentafel abgedeckt ist, und mit
einer flexiblen Umhüllung (22) des Gassackpakets (16), die das Gassackpaket (16) zusammenhält und die beim Aufblasen des Gassacks (18) längs einer vorbestimmten Reißlinie (26) an der Oberseite (24) des Gassackpakets (16) aufreißt,
wobei die Reißlinie (26), bezogen auf eine Draufsicht auf die Oberseite (24) des Gassackpakets (16), versetzt zu einem mittleren Abschnitt (36) der flexiblen Umhüllung (22) an der Oberseite (24) verläuft,
wobei die Reißlinie (26) über ihre Längserstreckung eine leichter aufreißende Hälfte (H1) und eine schwerer aufreißende Hälfte (H2) besitzt,
**dadurch gekennzeichnet, dass** die schwerer aufreißende Hälfte (H2) durch schräg verlaufende Schwächungslinien (40b) definiert ist, die eine geringere Neigung zum vorderen und/oder hinteren Rand (32, 34) und/oder eine geringere Länge aufweisen als schräg verlaufende Schwächungslinien (40a) der leichter aufreißenden Hälfte (H1).

2. Beifahrer-Frontgassackbaugruppe nach Anspruch 1, **dadurch gekennzeichnet, dass** die Reißlinie (26), bezogen auf eine Draufsicht auf die Oberseite (24) des Gassackpakets (16), in der im eingebauten Zustand von der Fahrzeugfront weiter entfernten Hälfte der Oberseite (24) verläuft.

3. Beifahrer-Frontgassackbaugruppe nach Anspruch 3, **dadurch gekennzeichnet, dass** die Reißlinie (26) insgesamt im Wesentlichen parallel zum vorderen und/oder hinteren Rand (32, 34) verläuft, insbesondere wobei die Reißlinie (26) näher zum hinteren Rand (34) als zum vorderen Rand (32) liegt.

4. Beifahrer-Frontgassackbaugruppe nach einem der vorhergehenden Ansprüche, **dadurch gekennzeichnet, dass** die Reißlinie (26) aus einzelnen, nicht miteinander verbundenen Schwächungszonen, insbesondere Schwächungslinien (40a, 40b, 42), weiter insbesondere Perforationen, zusammengesetzt ist.

5. Beifahrer-Frontgassackbaugruppe nach einem der vorhergehenden Ansprüche, **dadurch gekennzeichnet, dass** schräg verlaufende Schwächungslinien (40a, 40b) vorgesehen sind, die schräg zum vorderen und/oder hinteren Rand (32, 34) verlaufen sowie insbesondere parallel zueinander ausgerichtet sind.

6. Beifahrer-Frontgassackbaugruppe nach dem Oberbegriff des Anspruchs 1, insbesondere nach einem der vorhergehenden Ansprüche, **dadurch gekennzeichnet, dass** schräg zum vorderen und/oder hinteren Rand verlaufende Schwächungslinien (40a, 40b) vorhanden sind sowie parallel zum vorderen und/oder hinteren Rand (32, 34) verlaufende Schwächungslinien (42), welche sich mit den schräg verlaufenden Schwächungslinien (40a, 40b) abwechseln.

7. Beifahrer-Frontgassackbaugruppe nach einem der vorhergehenden Ansprüche, **dadurch gekennzeichnet, dass** die flexible Umhüllung (22) aus einem, keine Eigensteifigkeit aufweisenden Material ist, insbesondere aus einer Folie oder einem Faser- oder Gewebematerial und weiter insbesondere aus Gassackgewebe ist.

8. Beifahrer-Frontgassackbaugruppe nach einem der vorhergehenden Ansprüche, **dadurch gekennzeichnet, dass** die flexible Umhüllung (22) um das Gassackpaket (16) herumgeschlungen ist und sich überlappende Enden (44, 48) besitzt, wobei in dem Überlappungsbereich der Enden (44, 48) Reißlinien (26, 52) in beiden im überlappenden Bereich übereinanderliegenden Lagen der flexiblen Umhüllung (22) ausgebildet sind.

9. Beifahrer-Frontgassackmodul (12), mit einer Beifahrer-Frontgassackbaugruppe nach einem der vorhergehenden Ansprüche und mit einem Gasgenerator (20) zum Aufblasen des Gassacks (18).

10. Beifahrer-Frontgassackmodul (12) nach Anspruch 9, **dadurch gekennzeichnet, dass** der Gasgenerator (20) in Draufsicht auf die Oberseite (24) des Gassackpakets (16) versetzt zu einem mittleren Abschnitt (36) der flexiblen Umhüllung (22), insbesondere im Wesentlichen parallel zum vorderen und/oder hinteren Rand (32, 34), verläuft und dass die Reißlinie (26) in Draufsicht gegenüber dem Gasgenerator (20) versetzt ist, insbesondere in der im eingebauten Zustand der Windschutzscheibe (30) abgewandten Hälfte liegt.

11. Beifahrer-Frontgassackmodul nach Anspruch 9 oder 10, **dadurch gekennzeichnet, dass** der Gasgenerator (20) ein Rohrgasgenerator ist.

12. Beifahrer-Frontgassackmodul nach Anspruch 11, **dadurch gekennzeichnet, dass** der Gasgenerator (20) nur in einer seiner beiden Längshälften Strömungsöffnungen (38) hat, dass die Reißlinie (26) über ihre Längserstreckung eine leichter aufreißende und eine schwerer aufreißende Hälfte (H1, H2) besitzt und dass die schwerer aufreißende Hälfte (H2) der Reißlinie (26) in der Längshälfte mit den Strömungsöffnungen (38) liegt.

13. Fahrzeuginsassen-Rückhaltevorrichtung (10) mit einem Beifahrer-Frontgassackmodul (12) nach einem der Ansprüche 9-12, **dadurch gekennzeichnet, dass** das Gassackmodul (12) unterhalb eines Abschnitts der Armaturentafel (25), welcher der Windschutzscheibe (30) zugewandt ist, angeordnet ist und wobei ein Bereich (28) der Armaturentafel (25) so ausgeführt ist, dass er beim Entfalten des Gassacks (18) geöffnet wird.

14. Fahrzeuginsassen-Rückhaltevorrichtung nach Anspruch 13, **dadurch gekennzeichnet, dass** das Gassackpaket (16) und die Reißlinie (26) quer zur Fahrzeuglängsrichtung (L) ausgerichtet sind.

15. Fahrzeuginsassen-Rückhaltevorrichtung nach Anspruch 13 oder 14 mit einem Beifahrer-Frontgassackmodul (12) nach Anspruch 12, **dadurch gekennzeichnet, dass** die leichter aufreißende Hälfte (H1) der Reißlinie (26) näher an der dem Beifahrer zugeordneten Tür (39) des Fahrzeugs liegt als die schwerer aufreißende Hälfte (H2).

## Claims

1. A passenger front airbag assembly for being mounted beneath the upper portion of the instrument panel facing the windscreen (30) of a vehicle,
comprising an airbag (18) which is folded into an airbag package (16) which in the mounted state comprises a front edge (32) facing the vehicle front as well as a rear edge (34) facing the vehicle rear end and an upper side (24) which in the mounted state faces the windscreen (30) and is covered by an area (28) of the upper portion of the instrument panel facing the windscreen (30), and comprising
a flexible wrapping (22) of the airbag package (16) holding the airbag package (16) together and during inflation of the airbag (18) tearing along a predetermined tear line (26) at the upper side (24) of the airbag package (16),
wherein the tear line (26), related to a top view onto the upper side (24) of the airbag package (16), extends offset from a central portion (36) of the flexible wrapping (22) on the upper side (24),
wherein the tear line (26) over its longitudinal extension includes an easy-tearing half (H1) and a hard-tearing half (H2),
**characterized in that** the hard-tearing half (H2) is defined by slanted weakened lines (40b) which exhibit less inclination to the front and/or rear edge (32, 34) and/or a smaller length than the slanted weakened lines (40a) of the easy-tearing half (H1).

2. The passenger front airbag assembly according to claim 1, **characterized in that** the tear line (26), related to a top view onto the upper side (24) of the airbag package (16), extends in the half of the upper side (24) which in the mounted state is more distant from the vehicle front end.

3. The passenger front airbag assembly according to claim 3, **characterized in that** the tear line (26) in total extends substantially in parallel to the front and/or rear edge (32, 34), especially wherein the tear line (26) is located closer to the rear edge (34) than to the front edge (32).

4. The passenger front airbag assembly according to any one of the preceding claims, **characterized in that** the tear line (26) is composed of individual non-connected weakened zones, in particular weakened lines (40a, 40b, 42), further in particular perforations.

5. The passenger front airbag assembly according to any one of the preceding claims, **characterized in that** slanted weakened lines (40a, 40b) are provided which extend obliquely relative to the front and/or rear edge (32, 34) and are in particular aligned in parallel to each other.

6. The passenger front airbag assembly according to the preamble of claim 1, in particular according to any one of the preceding claims, **characterized in that** slanted weakened lines (40a, 40b) extending obliquely relative to the front and/or rear edge as well as weakened lines (42) extending in parallel to the front and/or rear edge (32, 34) are provided which alternate with the slanted weakened lines (40a, 40b).

7. The passenger front airbag assembly according to any one of the preceding claims, **characterized in that** the flexible wrapping (22) is made of a material which has no inherent rigidity, in particular of a film or a fiber or fabric material and further in particular of airbag fabric.

8. The passenger front airbag assembly according to any one of the preceding claims, **characterized in that** the flexible wrapping (22) is wound around the airbag package (16) and has overlapping ends (44, 48), wherein in the overlapping area of the ends (44, 48) tear lines (26, 52) are formed in both layers of the flexible wrapping (22) which are lying on top of each other in the overlapping area.

9. A passenger front airbag module (12), comprising a passenger front airbag assembly according to any one of the preceding claims and comprising a gas generator (20) for inflating the airbag (18).

10. The passenger front airbag module (12) according to claim 9, **characterized in that** in a top view onto the upper side (24) of the airbag package (16) the gas generator (20) extends offset from a central portion (36) of the flexible wrapping (22), in particular substantially in parallel to the front and/or rear edge (32, 34), and **in that** in a top view the tear line (26) is offset from the gas generator (20) and is especially located in the half facing away from the windscreen (30) in the mounted state.

11. The passenger front airbag module according to claim 9 or 10, **characterized in that** the gas generator (20) is a tubular gas generator.

12. The passenger front airbag module according to claim 11, **characterized in that** the gas generator (20) includes flow openings (38) only in one of its two longitudinal halves, **in that** over its longitudinal extension the tear line (26) has an easy-tearing half and a hard-tearing half (H1, H2) and **in that** the hard-tearing half (H2) of the tear line (26) is located in the longitudinal half including the flow openings (38).

13. A vehicle occupant restraint device (10) comprising a passenger front airbag module (12) according to any one of the claims 9 to 12, **characterized in that** the airbag module (12) is arranged beneath a portion of the instrument panel (25) facing the windscreen (30), and wherein an area (28) of the instrument panel (25) is configured to be opened upon deployment of the airbag (18).

14. The vehicle occupant restraint device according to claim 13, **characterized in that** the airbag package (16) and the tear line (26) are aligned transversely to the longitudinal vehicle direction (L).

15. The vehicle occupant restraint device according to claim 13 or 14 comprising a passenger front airbag module (12) according to claim 12, **characterized in that** the easy-tearing half (H1) of the tear line (26) is located closer to the door (39) of the vehicle assigned to the passenger than the hard-tearing half (H2).

## Revendications

1. Module airbag frontal passager pour installation sous le pare-brise (30) d'un véhicule faisant face à la partie supérieure du tableau de bord, avec
un coussin gonflable (18), qui est plié pour former un ensemble coussin gonflable (16), lequel dans un état monté comprend un bord avant (32) faisant face à la partie avant du véhicule ainsi qu'un bord arrière (34) tourné vers l'arrière arrière du véhicule et une partie supérieure (24), qui, dans un état monté, fait face au pare-brise (30) et qui est recouvert dans la zone (28) de la partie supérieure du tableau de bord faisant face au pare-brise (30), et avec
une gaine flexible (22) de l'ensemble coussin gonflable (16) qui maintient l'ensemble coussin gonflable (16) et qui lors du gonflage du coussin gonflable (18) se rompt le long d'une ligne de rupture prédéterminée (26) dans la partie supérieure (24) de l'ensemble coussin gonflable (16),
pour lequel la ligne de rupture (26), en vue de dessus du côté supérieur (24) de l'ensemble coussin gonflable (16), est décalée par rapport à une section médiane (36) de la gaine flexible (22) sur le côté supérieur (24),
pour lequel la ligne de rupture (26) comporte une moitié plus facile à rompre (H1) et une moitié plus difficile à rompre (H2) sur son étendue longitudinale,
**caractérisé en ce que** la moitié la plus difficile à rompre (H2) est définie par des lignes d'affaiblissement obliques (40b), lesquelles possèdent une inclinaison plus faible vers les bords avant et/ou arrière (32, 34) et/ou une longueur plus courte que les lignes obliques de la ligne d'affaiblissement (40a) de la moitié la plus facile à rompre (H1).

2. Module airbag frontal pour passager selon la revendication 1, **caractérisé en ce que** la ligne de rupture (26), considérée en vue de dessus de la face supérieure (24) de l'ensemble coussin gonflable (16), s'étend dans un état installé sur la moitié de la partie supérieure (24) éloignée de l'avant du véhicule.

3. Module airbag frontal pour passager selon la revendication 3, **caractérisé en ce que** la ligne de rupture (26) s'étend globalement sensiblement parallèle aux bords avant et/ou arrière (32, 34), pour lequel particulièrement la ligne de rupture (26) se trouve plus proche du bord arrière (34) que du bord avant (32).

4. Module airbag frontal pour passager selon l'une quelconque des revendications précédentes, **caractérisé en ce que** la ligne de rupture (26) est constituée de zones d'affaiblissement individuelles non reliées les unes aux autres, notamment des lignes de faiblesse (40a, 40b, 42), plus particulièrement des perforations.

5. Module airbag frontal pour passager selon l'une quelconque des revendications précédentes, **caractérisé en ce que** des lignes obliques d'affaiblissement (40a, 40b) sont prévues, lesquelles s'étendent obliquement vers les bords avant et/ou arrière (32, 34), de telle sorte qu'elles s'étendent en particulier parallèlement les unes par rapport aux autres.

6. Module airbag frontal pour passager selon le préambule de la revendication 1, en particulier selon l'une quelconque des revendications précédentes, **caractérisé en ce que** des lignes d'affaiblissement (40a, 40b) sont présentes s'étendant obliquement vers les bords avant et/ou arrière, ainsi que des lignes d'affaiblissement (42) parallèles aux bords avant et/ou arrière (32, 34), lesquelles alternent avec les lignes obliques d'affaiblissement (40a, 40b).

7. Module airbag frontal pour passager selon l'une quelconque des revendications précédentes, **caractérisé en ce que** l'enveloppe flexible (22) est faite d'un matériau ne présentant aucune rigidité, en particulier d'un film ou d'un matériau en fibres ou en tissu, et plus particulièrement du tissu de coussin gonflable.

8. Module airbag frontal pour passager selon l'une quelconque des revendications précédentes, **caractérisé en ce que** l'enveloppe flexible (22) est enroulée autour de l'ensemble coussin gonflable (16) et possède des extrémités (44, 48) se superposant, pour lequel dans la zone de chevauchement des extrémités (44, 48) des lignes de rupture (26, 52) sont réalisées dans les deux zones se superposant en recouvrant l'une et l'autre des couches de la gaine flexible (22).

9. Module airbag frontal passager (12), avec un airbag frontal passager selon l'une des revendications précédentes et avec un générateur de gaz (20) pour gonfler le coussin gonflable (18).

10. Module airbag frontal passager (12) selon la revendication 9, **caractérisé en ce que** le générateur de gaz (20), en vue de dessus de la face supérieure (24) de l'ensemble sac gonflable (16), passe dans une partie médiane (36) de l'enveloppe flexible (22), en particulier s'étend sensiblement parallèle aux bords avant et/ou arrière (32, 34), et **en ce que** la ligne de rupture (26) est décalée en vue de dessus par rapport au générateur de gaz (20), et se situe en particulier à l'état monté dans la moitié de la partie faisant face au pare-brise (30).

11. Module airbag frontal passager selon la revendication 9 ou 10, **caractérisé en ce que** le générateur de gaz (20) est un générateur de gaz tubulaire.

12. Module airbag frontal passager selon la revendication 11, **caractérisé en ce que** le générateur de gaz (20) a seulement dans une de ses deux moitiés longitudinales des ouvertures d'écoulement (38), **en ce que** la ligne de rupture (26) possède sur son étendue longitudinale une moitié d'extrémité plus facile à rompre et une moitié d'extrémité plus difficile à rompre (H1, H2) et **en ce que** la moitié d'extremité plus difficile à rompre (H2) de la ligne de rupture (26) se trouve dans la moitié longitudinale comprenant les ouvertures d'écoulement (38).

13. Dispositif de retenue d'occupant de véhicule (10) comportant un module airbag frontal passager (12) selon l'une quelconque des revendications 9-12, **caractérisé en ce que** le module airbag (12) est agencé au-dessous d'une partie du tableau de bord (25), lequel est tourné vers le pare-brise (30) et pour lequel une partie (28) du tableau de bord (25) est conçue pour s'ouvrir lors du déploiement du coussin gonflable (18).

14. Dispositif de retenue de passager de véhicule selon la revendication 13, **caractérisé en ce que** l'ensemble sac gonflable (16) et la ligne de rupture (26) sont alignés perpendiculairement à la direction longitudinale du véhicule (L).

15. Dispositif de retenue de passager de véhicule selon la revendication 13 ou 14 avec un module airbag frontal passager (12) selon la revendication 12, **caractérisé en ce que** la moitié d'extrémité la plus facile à rompre (H1) de la ligne de rupture (26) se trouve plus proche de la porte associée au passager du véhicule que la moitié la plus difficile à rompre (H2).
